# FASCICULE DE BREVET EUROPEEN

(11) **EP 0 557 210 B1**
(45) Date de publication et mention de la délivrance du brevet: **06.05.1998**
(21) Numéro de dépôt: 93400453.2
(22) Date de dépôt: 22.02.1993
(51) Int. Cl.: H04L 12/66

(54) **Système de relais de transports OSI entre un réseau en mode connecté et un réseau en mode non connecté**
OSI-Transportrelaianordnung zwischen Netzen in verbundener und unverbundener Betriebsart
OSI transport relay system between a connection-oriented network and a connection-less network

(30) Priorité: 21.02.1992 FR 9202048
(43) Date de publication de la demande: 25.08.1993
(73) Titulaire: BULL S.A., 92800 Puteaux (FR)
(72) Inventeur: Nguyen, Van Phuong, F-78130 Les Mureaux (FR)
(74) Mandataire: Gouesmel, Daniel

(56) Documents cités:
- COMPUTER NETWORKS AND ISDN SYSTEMS. vol. 23, no. 4, Janvier 1992, AMSTERDAM NL pages 253 - 266 , XP246521 H.J.J.H. SCHEPERS ET AL 'LAN/WAN INTERWORKING IN THE OSI ENVIRONMENT'
- IEEE JOURNAL ON SELECTED AREAS IN COMMUNICATION. vol. 7, no. 7, Septembre 1989, NEW YORK US pages 1131 - 1142 , XP54540 F.M.BURG ET AL 'NETWORKING OF NETWORKS:
- INTERWORKING ACCORDING TO OSI'

## Description

La présente invention concerne un système de relais de transport OSI assurant la coopération entre au moins un premier système mettant en oeuvre un profil de transport OSI (sigle anglo-saxon de Open Systems Interconnection) s'appuyant sur un service de réseau en mode connecté dit CONS (sigle anglo-saxon de Connected Oriented Network Service) et un second système mettant en oeuvre un profil de transport OSI s'appuyant sur un service de réseau en mode non connecté dit CLNS (sigle anglo-saxon de Connection Less Network Service). Elle est plus particulièrement applicable à l'interconnexion d'un premier système par exemple de type X-25, ou TRANSPAC fonctionnant en mode connecté et d'un second système s'appuyant sur un service de réseau en mode non connecté, par exemple de type ETHERNET.

On sait que les réseaux téléinformatiques et télématiques modernes fonctionnent suivant le même modèle de référence pour l'interconnexion de systèmes ouverts, connu sous le nom de modèle de référence OSI. Il définit l'architecture de ces réseaux en couches normalisées. Cette normalisation est adoptée conjointement par l'ISO (sigle anglais de International Standard Organization) et le CCITT (sigle français de Comité Consultatif International télégraphique et téléphonique). L'architecture du modèle OSI est constituée par l'empilement de 7 couches d'activités, la couche la plus basse (couche 1) correspondant à la transmission physique des signaux entre les différents systèmes au travers du support physique d'interconnexion (celui-ci pouvant être constitué de câbles co-axiaux, de fibres optiques, de paires torsadées, etc..) alors que la couche supérieure (couche 7) correspond aux fonctions réalisées par les programmes d'application et les utilisateurs du réseau téléinformatique.

Le rôle essentiel de chacune des 7 couches est rappelé ci-dessous :
- La couche 1, dite "couche physique" assure l'interconnexion physique entre les différents circuits mis en oeuvre pour véhiculer les signaux correspondant aux informations binaires,
- La couche 2 dite "liaison de données" gère les trames de données et effectue éventuellement la détection et la reprise des erreurs entre systèmes ouverts adjacents,
- La couche 3, dite "couche réseau", effectue le relais des différents paquets de données ainsi que leur routage vers le système destinataire,
- La couche 4, dite "couche de transport" a pour fonction essentielle d'effectuer le contrôle de bout en bout et l'optimisation du transport des données entre les systèmes source et destinataire (systèmes émetteur et récepteur des données). Cette couche opère toujours de bout en bout : Cela veut dire que la couche de transport du système initiateur (le système qui demande la connexion pour envoyer les données) communique directement, c'est à dire sans intermédiaire, avec la couche de transport équivalente du système destinataire. Ceci est vrai du point de vue du protocole de transport, mais il est bien évident que ces informations utilisées seulement par les couches de transport sont véhiculées physiquement par les autres couches inférieures 1,2,3. La couche de transport est la première couche à travailler de bout en bout. Les couches inférieures ne travaillent pas de la sorte, ce qui signifie que les systèmes intermédiaires entre le système initiateur et le système destinataire peuvent dialoguer entre eux dans les couches inférieures 1,2,3.
- La couche 5, dite couche "session", réalise l'initialisation, la synchronisation et la fin du dialogue entre systèmes source et destinataire. Cette couche est donc responsable de la négociation d'établissement et de terminaison de dialogue entre ces systèmes.
- La couche 6 dite "couche présentation", prend en charge les problèmes associés à la présentation des informations que les applications désirent échanger ou manipuler.
- La couche application, dite couche 7, prend en charge toutes les fonctions nécessaires aux applications réparties dans les systèmes et qui ne sont pas fournies par la couche 6.

Le modèle OSI définit également les concepts élémentaires permettant de décrire le fonctionnement de chaque couche ainsi que les relations entre les couches adjacentes. Les fonctions de la couche (N) sont réalisées au sein des systèmes ouverts du réseau considéré, par des entités (N). Ainsi les fonctions de la couche de transport sont réalisées par des entités de transport. L'interface entre les entités (N) est réalisée par l'ensemble des couches d'indice inférieur à N. Ainsi donc, l'interface entre les entités de transport (couche 4) du système source (SS) initiateur de la connexion, et celle du système destinataire (SD), est réalisée par l'ensemble des couches 1,2,3 de chacun de ces systèmes. Cette dernière interface est mise à la disposition des entités de transport de la couche 4, sous la forme d'un service d'interaction, plus communément appelé service, ici le service de réseau (couche 3).

Le mode de base de ce service d'interaction peut être le mode connecté, dit CONS dans lequel une connexion (N-1) doit avoir été établie entre les entités (N) pour qu'elles puissent communiquer. Le modèle OSI définit également des communications en mode non connecté dit CLNS.

Le service (N-1) est offert par les entités (N-1) aux entités (N) à des points d'accès au service, (service Access Point), plus communément désignés sous leurs sigles SAP. Ainsi le service offert par les entités de transport (couche 4) aux entités de session (couche 5) est offert à des points d'accès au service (Transport Service Access Point). En fait, une adresse de TSAP est parfaitement définie par le couple d'adresses formé par T-Sel et NSAP (pour Network Service Access Point). Ainsi pour le système source, celui-ci est désigné par TSAP_{S}, alors que pour le système destinataire, il est désigné par TSAP_{D}. Une valeur de T-Sel (Transport Selector) permet de sélectionner une entité de session parmi d'autres.

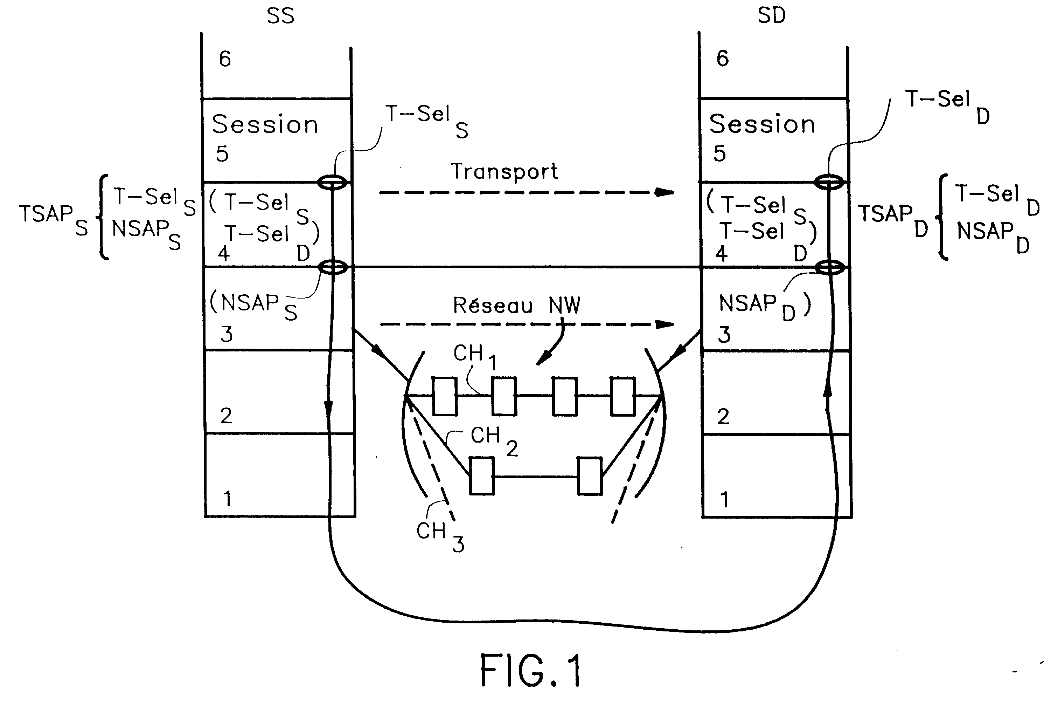

Le service offert par les entités de réseau (couche 3) aux entités de transport (couche 4) est offert à des points d'accès au service appelés NSAP. Ainsi, si l'on considère la figure 1, on voit que le point d'accès au service de transport de la session du système source SS est défini par une adresse T-Sel_{S}, le point d'accès au service réseau de l'entité de transport du système source étant défini par l'adresse NSAP_{S}. De même, pour le système destinataire SD, le point d'accès de la session au service de transport est défini par l'adresse T-Sel_{D}, (T - Sel = transport selector) alors que le point d'accès de l'entité de transport de ce même système à son service réseau est défini par l'adresse NSAP_{D}.

A une même valeur de NSAP, peuvent correspondre 2, voire davantage de sessions définies par des valeurs de T-Sel différentes (par conséquent correspondant à la même entité de transport). De même, il existe une correspondance entre une entité de transport déterminée et une valeur NSAP. Cependant, à une même entité de transport peuvent correspondre plusieurs valeurs de NSAP, dépendant de réseaux de type différents, en mode connecté ou non connecté, ayant des attachements physiques différents, etc...

Les valeurs de T-Sel sont véhiculées par la couche de transport de bout en bout, alors que les valeurs de NSAP peuvent être utilisées par les systèmes intermédiaires. Cependant, l'ensemble de ces valeurs est véhiculé physiquement au travers des couches 1,2,3 des systèmes source et destinataires SS et SD à travers le réseau NW (sigle de NETWORK). C'est le service de ce dernier qui choisit le chemin physique emprunté par les données entre le système source et le système destinataire, ce chemin pouvant être, ainsi qu'on peut le voir à la figure 1, l'un quelconque des chemins CH₁, CH₂, CH₃.

Lors de l'établissement d'une connexion entre une session du système source SS, et une session du système destinataire SD, le système source envoie une demande de connexion de transport au système destinataire. Cette demande de connexion, se traduit par l'émission d'un message appelé TPDU-CR, ce qui est le sigle anglais de Transport Protocol Data Unit Connection request. Cette dernière comprend la valeur du sélecteur de transport des systèmes source et destinataire, c'est à dire T-Sel_{S} et T-Sel_{D}. Préalablement à l'établissement de la connexion, l'entité de transport du système source SS fournit au service de réseau, les adresses NSAP_{S} et NSAP_{D}. Le service de réseau ouvre alors la voie à la connexion et effectue le routage grâce aux adresses de NSAP qui lui sont fournies. Une fois que ceci est effectué, la demande de connexion TPDU-CR est passée à la couche réseau constituant ainsi un paquet d'information à émettre. Une fois que la négociation entre les systèmes source et destinataire est terminée, la connexion étant alors définitivement établie, on ne transmet plus de TPDU-CR et par conséquent de valeur de T-Sel. A partir de ce moment là, seules sont utilisées les adresses de NSAP, c'est à dire NSAP_{S} et NSAP_{D}, dans les couches de réseaux en mode non connecté.

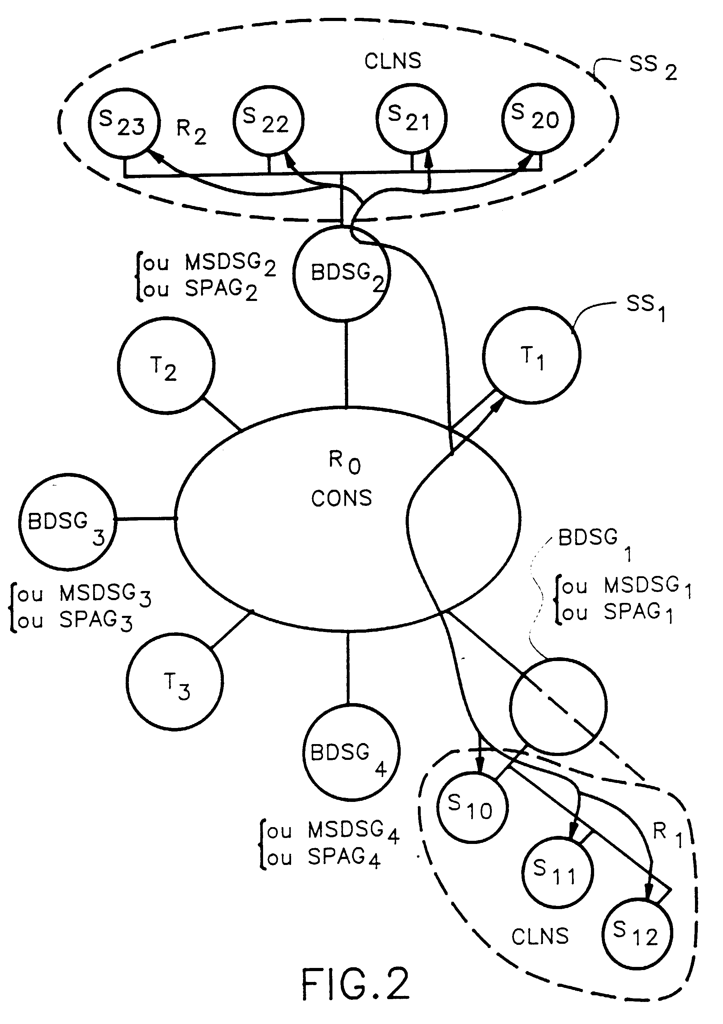

Les très grandes entreprises qui possèdent une pluralité d'établissements et de succursales, utilisent dans chacun de ces derniers et dernières, des systèmes informatiques reliés entre eux par des réseaux travaillant aussi bien en mode connecté qu'en mode non connecté. C'est le cas par exemple des grandes entreprises de production et de distribution d'énergie. Chacune de ces entreprises possède un grand nombre de centrales de production d'électricité et un grand nombre d'établissements de recherche et d'études, ainsi que diverses succursales réparties à travers l'ensemble des territoires que cette entreprise dessert. Ceci est illustré par la figure 2. Elle possède un certain nombre de systèmes informatiques reliés à travers un réseau R1 qui relie ensemble plusieurs systèmes S₁₀, S₁₁, S₁₂, etc... utilisant des services de réseaux en mode non connecté, par exemple des services d'un réseau normalisé de type ETHERNET (ISO 8802-3). Elle possède également d'autres réseaux reliant des systèmes informatiques de divers établissements, par exemple R2 qui relie entre eux les systèmes informatiques S₂₀, S₂₁, S₂₂, S₂₃, etc fonctionnant également suivant le mode non connecté. Et elle possède également d'autres systèmes T₁, T₂, T₃, T₄ etc. L'ensemble des réseaux tels que R₁, R₂, et des systèmes tels que T₁, T₄ communiquent entre eux par l'intermédiaire d'un réseau R₀, fonctionnant en mode connecté, par exemple un réseau de type TRANSPAC.

Si l'on veut faire communiquer en tant que système source SS₁ le système T₁ avec tel ou tel système appartenant au réseau R₁, on passe donc par le réseau R₀, puis par le réseau R₁, et par conséquent, d'un service de réseau fonctionnant en mode connecté à un service de réseau fonctionnant en mode non connecté.

Le mode de service connecté CONS s'appuie sur les services et protocoles de réseau définis par les normes ISO 8878 et ISO 8208 (ou encore CCITT X-25) alors que le mode non connecté CLNS s'appuie sur les services et protocoles de réseau définis par la norme ISO 8473, incluant la norme ISO 9542 définissant les mécanismes et protocoles de routage associé.

De par leur mode de fonctionnement, les services de réseau en mode connecté et non connecté s'appuient sur deux ensembles de protocoles, totalement incompatibles entre eux. Un système mettant en oeuvre un profil de transport ISO, s'appuyant sur un service de réseau CONS, tel que R₀ ne peut donc pas coopérer avec un système mettant en oeuvre un profil de transport ISO s'appuyant sur un service de réseau de type CLNS, tel que le réseau R₁.

Pour permettre à de tels systèmes s'appuyant sur des services de réseau incompatibles entre eux, de coopérer, plusieurs techniques ont été mises au point. Elles s'appuient sur des relais au niveau de l'entité de transport. Des relais de transport correspondant ont donc été définis et par exemple, proposés par l'organisme européen SPAG qui a défini le relais de type SPAG (SPAG est le sigle anglo-saxon de Standard Promotion for Application Group, qui regroupe douze constructeurs européens). Cette technique de relais est définie dans le document appelé GUS3.1 (GUS est le sigle anglo-saxon de Guide for Use of standard) au travers de deux recommandations appelées R31 et R32 qui définissent des relais entre un profil de transport sur un service de réseau de type CLNS et un profil de transport sur un service de réseau de type CONS respectivement relatifs à deux variantes du même protocole de type CLNS (Variante appelée Inactive Subset ou IPNL, et variante appelée Full subset).

Un tel relais SPAG est plus spécifiquement décrit dans le document "Computer Networks and ISDN Systems" Vol. 23, n°4, Janvier 1992. La technique de relais SPAG est basée sur des formats spécifiques des sélecteurs de transport T-Sel, permettant d'obtenir l'adresse de NSAP et la vraie valeur du sélecteur de transport T-Sel du système destinataire, le système relais exploitant ces informations pour effectuer les connexions. Le système relais peut être par exemple dénommé par SPAG₁ montré à la figure 2 entre le réseau R₁ et le réseau R₀. Ce peut être également le relais SPAG₂ situé entre le réseau R₀ et le réseau R₂.

Cette technique contraint le système relais à posséder une table de correspondance qui lui permet d'utiliser en fonction des valeurs de NSAP et T-Sel qu'il reçoit, d'en déduire une nouvelle valeur de NSAP et de T-Sel pour prolonger la demande de connexion.

L'inconvénient de ce système est d'introduire un degré de contrainte trop élevé car il est nécessaire d'assurer la cohérence entre les différentes tables de correspondance des différents systèmes relais tout le long du chemin de données. Par ailleurs, il est difficile d'utiliser plus de deux systèmes relais successifs.

On connait également une autre technique de relais de transport appelé MSDSG ( Multi System Distributed System Gateway), à laquelle correspondent les relais MSDSG₁ et MSDSG₂ de la figure 2 (en remplacement des relais correspondant SPAG₁ ou SPAG₂). Cette technique de relais effectue le routage au niveau de l'entité de transport sur la base des adresses de NSAP qui lui sont fournies par les couches réseau.

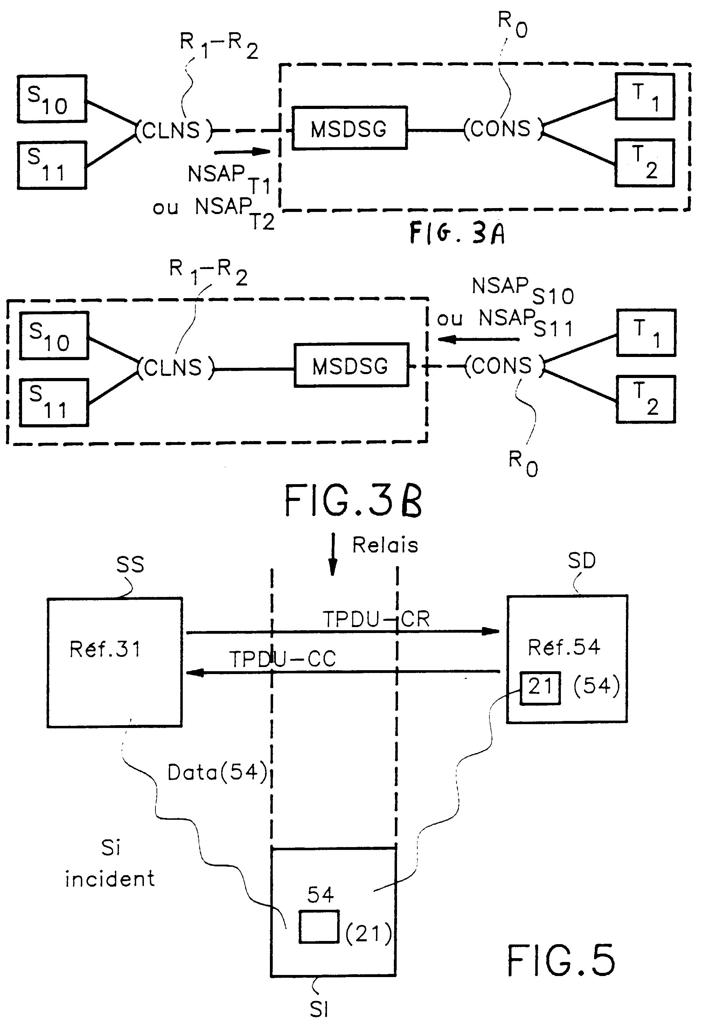

Cette technique comporte un certain nombre d'inconvénients dans des cas de mise en oeuvre simultanée de plusieurs niveaux de relais : relais au niveau réseau et transport. Elle comporte également des problèmes liés à la mise en oeuvre des protocoles de routage dynamique (par exemple ISO 9542) et dans des cas de systèmes relais en parallèle : des problèmes de collision de référence de transport surviennent ainsi que des problèmes de chemins de routage simultané. Ces différents inconvénients seront mieux compris en référence à la suite de la description en relation avec les figures 3, 4 et 5.

La présente invention permet de remédier à ces inconvénients et est basé sur un concept d'adressage utilisant les adresses de TSAP au niveau de la couche transport ISO (véhiculée par la TPDU-CR), l'adresse de NSAP appelée permettant de choisir un ensemble de chemins pour atteindre le système destinataire.

Selon l'invention, dans un système comportant au moins un relais de transport OSI, la méthode pour assurer la coopération entre au moins un premier système contenant au moins un système source (SS), mettant en oeuvre un profil de transport OSI s'appuyant sur un service de réseau en mode connecté dit CONS et au moins un second système incluant au moins un système destinataire (SD) mettant en oeuvre un profil de transport OSI s'appuyant sur un service de réseau en mode non connecté dit CLNS,
comprenant les étapes suivantes :
1) le routage des informations s'effectue sur la couche de transport en utilisant les sélecteurs de transport T-Sel pour les systèmes source et destinataire (T-Sels et T-Seld, respectivement)
2) on utilise les adresses NSAP des points d'accès (NSAPs et NSAPd) au service réseau des systèmes source et destinataire(SS et SD),
est caractérisée en ce que :
3) on transporte les adresses TSAP des points d'accès au service transport des systèmes source et destinataire (TSAPs, TSAPd) de bout en bout par la couche de transport de manière transparente et sans modification, à l'intérieur des demandes de connexion TPDU-CR, les adresses des points d'accès au service réseau utilisées par le service réseau étant celles des systèmes source et du relais (NSAPs, NSAPd) .

D'autres caractéristiques et avantages de la présente invention apparaitront dans la description suivante donnée à titre d'exemple non limitatif et en se référant aux dessins annexés.

Sur ces dessins :
- La figure 1 rappelle comment est constitué le modèle de référence OSI,
- La figure 2 montre un ensemble de systèmes informatiques reliés entre eux par des services de réseaux de type connecté CONS et non connecté CLNS, utilisant des systèmes relais de transport pouvant être ceux de l'art antérieur, ou ceux de l'invention,
- Les figures 3A et 3B montrent la structure générale d'un système de relais de transport de type MSDSG selon l'art antérieur,
- La figure 4 montre comment fonctionne, en mode de représentation par couches du modèle OSI, un système de relais de transport selon l'art antérieur MSDSG,
- La figure 5 montre les inconvénients du système relais de transport de type MSDSG selon l'art antérieur,
- La figure 6 montre comment fonctionne le système d'au moins un relais de transport selon l'invention, les systèmes destinataire et source, ainsi que le relais étant représenté en couches selon le modèle de référence OSI,
- La figure 7 montre comment sont respectivement composées les demandes de connexion de type TPDU-CR, d'une part pour le relais de transport de type MSDSG selon l'art antérieur, et d'autre part pour le relais de transport de type BDSG selon l'invention BDSG correspond au sigle anglo-saxon de "Bull Distributed System Gateway",
- La figure 8 montre plus en détail ce qui se passe au niveau des adresses de service de transport et des adresses de service réseau pour les couches 3, 4, 5, pour les systèmes de relais de transport de types MSDSG et BDSG respectivement selon l'art antérieur et selon l'invention.

Pour mieux comprendre la structure et le fonctionnement du système d'au moins un relais de transport de type BDSG selon l'invention, il est utile de rappeler la structure et le fonctionnement du système de relais de transport de type MSDSG selon l'art antérieur qui est décrit dans la référence "Position Paper and solution for CONS-CLNS interworking" en date du 16.11.87 publié par l'association de constructeurs et d'industriels américains appelée MAP/TOP.

Ainsi qu'il a été dit plus haut, la technique de relais de transport de type MSDSG illustrée par les figures 3 à 5, est basée sur la gestion et l'affectation des adresses de NSAP. Dans un tel système relais, les systèmes appartenant aux réseaux de type CONS, par exemple au réseau R₀ de la figure 2, sont configurés sur des voies de sortie utilisant le service de réseau s'appuyant sur X25-84 et les systèmes de type CLNS, par exemple les réseaux R₁, R₂ sont configurés sur des voies de sortie utilisant la couche INTERNET-FULL, ce qui est le cas par exemple des réseaux de type ETHERNET.

Si l'on considère la figure 3A, on voit que, vus du monde CLNS, c'est à dire vus de n'importe quel système tel que S₁₀, S₁₁ appartenant à R₁, tous les systèmes de type CONS situés derrière le relais de transport MSDSG, c'est à dire tous les systèmes tels que T₁, T₂ connectés au réseau R₀ sont vus comme accessibles du point de vue de leurs adresses de NSAP à travers ce relais de type MSDSG.

Inversement, pour un système appartenant au monde CONS, un système quelconque appartenant au monde CLNS et desservi par le relais de type MSDSG, est vu comme accessible du point de vue de son adresse de NSAP, à travers ce dernier.

Par suite, dans un système relais par exemple MSDSG1, une demande de connexion entrant du côté du monde CLNS comportant l'adresse de NSAP destinataire du monde CONS, par exemple l'adresse de NSAP du système T₁ ou T₂, sera remontée vers la couche de transport relative au monde CLNS, laquelle effectue un adossement de connexion vers la couche de transport du monde CONS et prolonge ainsi la connexion.

Inversement, un algorithme similaire s'applique sur une demande de connexion entrant du côté du monde CONS, pour prolonger la connexion vers le monde CLNS, en utilisant l'adresse de NSAP par exemple du système destinataire S₁₀ ou S₁₁.

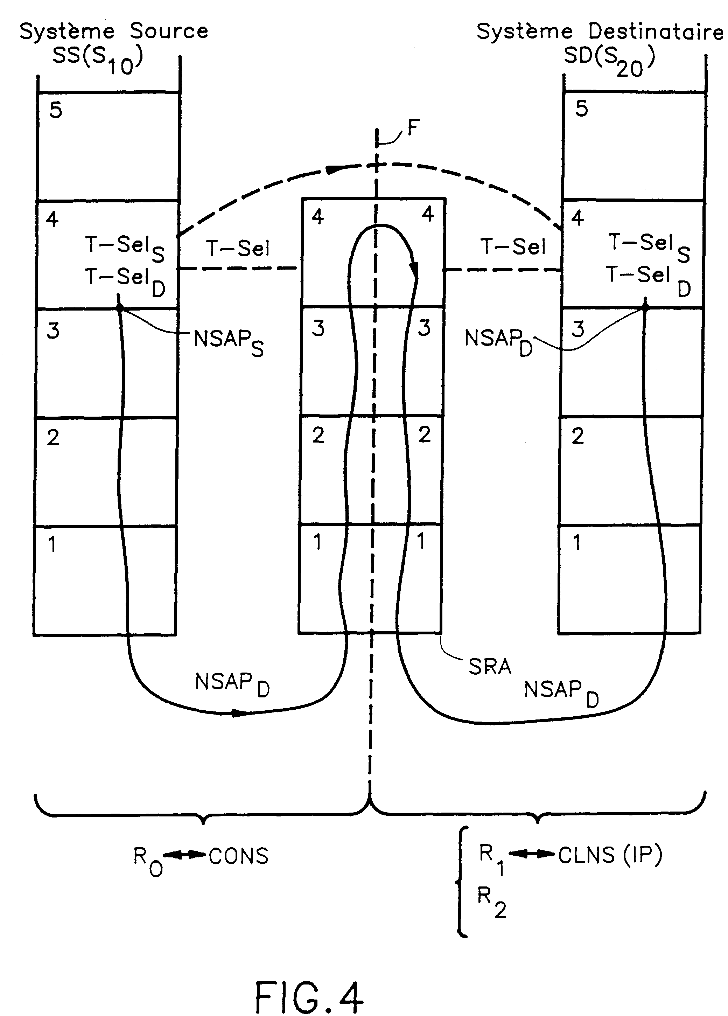

Les deux connexions de transport adossées l'une à l'autre dans le système de relais de transport selon MSDSG sont indépendantes au point de vue des éléments protocolaires qu'il s'agisse de la classe de transport, du crédit, de la fenêtre, et des différentes options possibles. Une autre manière de comprendre le fonctionnement du relais de transport SRA (sigle de Système Relais selon l'Art Antérieur) de type MSDSG selon l'art antérieur est indiqué à la figure 4. Chacun des systèmes, qu'il s'agisse du système source SS, représenté par exemple par le système S₁₀, du système relais SRA ou encore du système destinataire SD représenté par exemple par le système S₂₀ y est montré sous forme de l'empilement des couches du modèle de référence OSI.

A la figure 4, on n'a représenté pour simplifier que l'ensemble des couches 1 à 5.

Ainsi qu'il a été dit plus haut, les deux valeurs de T-Sel des systèmes source et destinataire, à savoir T-Sel_{S} et T-Sel_{D} sont véhiculées par la couche de transport de bout en bout.

La frontière F entre les deux réseaux de type CONS et CLNS passe au milieu du relais SRA. Il est rappelé que de part et d'autre de cette frontière aucun dialogue n'est possible entre les couches 3 de réseau (puisque l'une veut une connexion pour fonctionner, alors que l'autre n'en a pas besoin). Pour pouvoir effectuer la connexion, il est nécessaire de passer par une couche qui, au niveau du fonctionnement, est commune aux deux mondes. Cela ne peut être effectué qu'au niveau de la couche de transport. On ira donc du système SS au relais SRA en redescendant de la couche 4 à la couche 1 du système source, puis en allant de la couche 1 à la couche 4 de SRA du côté du monde CONS. On atteint donc la couche de transport du SRA pour redescendre ensuite sur la couche réseau 3 du monde CLNS. Dans ce cas, la couche 4 du système relais est une couche de transport intermédiaire entre les couches de transport des systèmes source et destinataire. Soit NSAP_{D} l'adresse du point d'accès au service réseau du système destinataire SD, qui est fournie par la session du système source SS. L'entité de transport du système source dialogue avec l'entité de transport du relais SRA (il s'agit d'un contrôle de bout en bout entre le système source et SRA). Quand SRA reçoit une demande de connexion au niveau de sa couche de transport, il cherche à relayer celle-ci vers le système destinataire SD. Dès qu'il voit arriver l'adresse NSAP_{D}, il interprète cette donnée comme identifiant sa propre couche de transport. Il la fait remonter vers celle-ci, NSAP_{D} étant ainsi reprise pour prolonger la connexion et donc envoyée par le système relais SRA à travers ses couches 4,3,2,1 vers les couches 1, 2, 3, 4 du système destinataire SD. Il faut observer que pendant ce temps, au niveau des entités de transport, on utilise les valeurs T-Sel_{S} et T-Sel_{D}, alors qu'au niveau réseau, ce sont les valeurs de NSAP_{S} et NSAP_{D} qui sont utilisées.

On voit donc que dans le système relais de type MSDSG l'entité de transport effectue le routage sur la base de NSAP_{D} qui est normalement utilisée dans la couche réseau 3, selon le modèle de référence OSI.

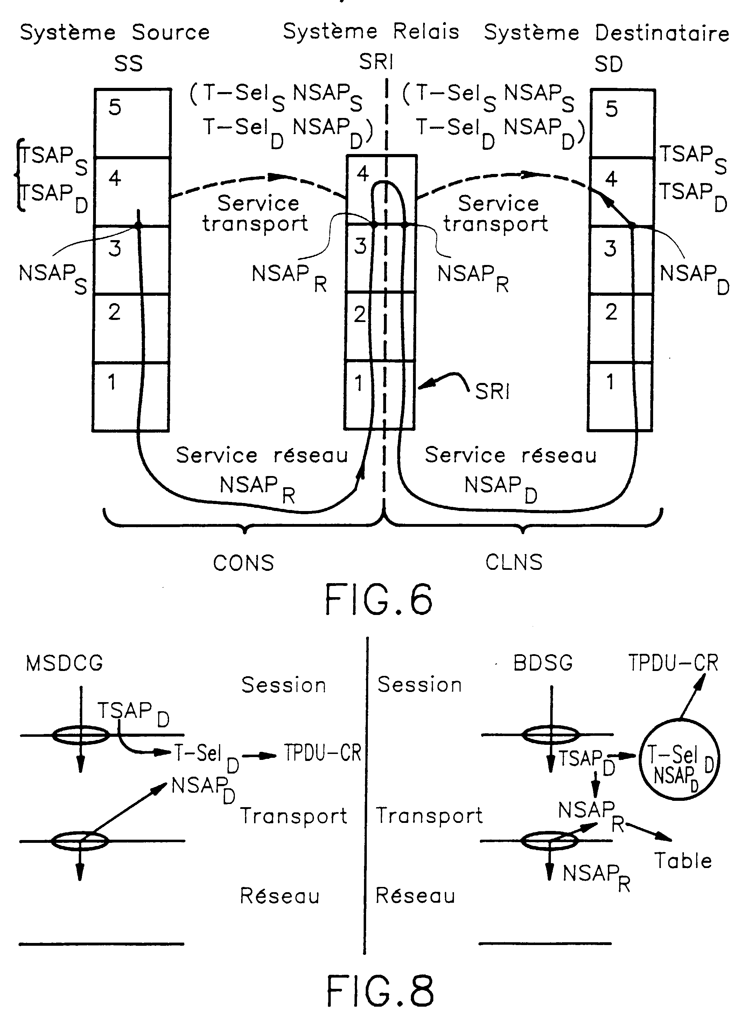

On considère les figures 3B et 5 qui illustrent les problèmes qui se posent aux relais de type MSDSG.

On considère désormais la figure 5 qui montre un système source et un système destinataire SS et SD qui échangent des demandes de connexion TPDU-CR et TPDU-CC. On sait que à l'intérieur des TPDU-CR ou TPDU-CC (le sigle CC, signifie Connect Confirm) sont contenus les sélecteurs de transport et une référence de transport déterminée. Ainsi, à la figure 5, le système source SS a une référence 31 alors que le système destinataire a une référence 54, par conséquent dans la TPDU-CR, le système source SS indique sa référence, c'est à dire 31, et dans la TPDU-CC, le système destinataire SD indique sa référence, c'est à dire 54 (ces références correspondant à la connexion de transport ouverte). Il existe donc un couple de références (54,31) ou (31,54). Dans le cas où il y a une interruption de connexion sur le chemin normal utilisé entre les systèmes source et destinataire, on peut passer par un système intermédiaire SI. Ce dernier peut accepter la connexion avec le système source SS s'il possède la même référence que le système destinataire SD, c'est à dire 54. Mais cela ne signifie pas que SI interprète la référence 54 comme étant destinée au système destinataire SD, cette même référence 54 pouvant avoir également une autre signification correspondant à une connexion de transport avec un autre système que SD. Dans ce cas, on dira qu'il y a une collision de référence, et le système intermédiaire SI pourra acheminer les données relatives à la connexion vers un autre système que SD.

On considère désormais la figure 6 qui montre le fonctionnement du système relais SRI (sigle de Système Relais selon l'Invention) selon l'invention. Pour illustrer ce fonctionnement on a représenté le système source SS, le relais SRI et le système destinataire SD sous forme de leurs empilements de couches du modèle de référence OSI. Comme dans la figure 4, on suppose que le réseau utilisé entre SS et SRI fonctionne en mode connecté CONS alors que entre SRI et SD, le réseau fonctionne en mode non connecté CLNS. Un tel relais est dit de type BDSG (Bull Distributed system gateway).

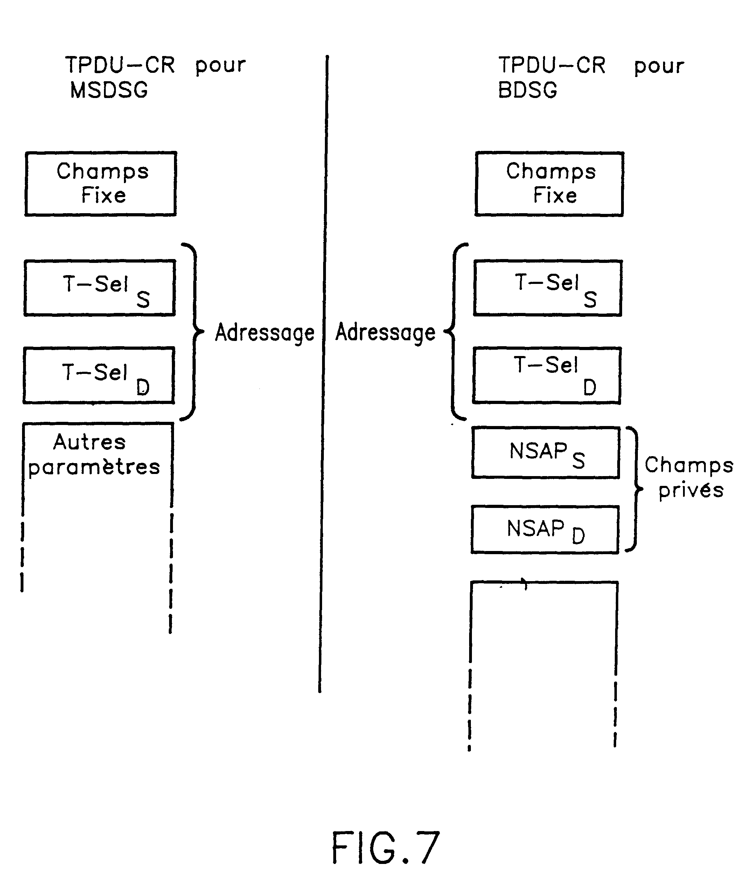

Selon l'invention, le système de relais de transport utilisant le relais SRI fonctionne en utilisant simultanément les deux aspects suivants :
1. vu des sessions (c'est à dire pour une communication de la session de SS vers la session SD) on utilise dans le protocole de transport, c'est à dire de bout en bout, les valeurs des points d'accès au service transport TSAP_{S} et TSAP_{D}. Cela s'effectue au niveau de la demande de connexion TPDU-CR, en y incluant d'une part, les valeurs des sélecteurs de transport T-Sel_{S} et T-Sel_{D}, (de la même façon que pour les demandes de connexion TPDU-CR utilisées par le relais selon l'art antérieur de type MSDSG, comme on peut le voir en regardant la figure 7). Et d'autre part, dans les champs privés, prévus et autorisés par la norme (ISO8073 un composant du modèle de référence OSI), les adresses des points d'accès au service réseau des systèmes source et destinataire SS et SD, c'est à dire NSAP_{S} et NSAP_{D}. On voit bien que dans la demande de connexion, utilisée dans le relais de type BDSG selon l'invention , on trouve les valeurs de TSAP formées par l'association des valeurs de T-Sel et NSAP.
   Ces valeurs de TSAP, comme on peut s'en rendre compte à la figure 6, sont véhiculées de bout en bout, sans modification, à l'intérieur du protocole de transport.
2. Vu de la couche de transport, la communication de la session du système source vers la session du système destinataire utilise en plus les adresses de NSAP du relais SRI (ceci est valable quel que soit le nombre de relais). Cette adresse de SRI est désignée par NSAP_{R}.

En se reportant à la figure 6, on voit que dans le réseau de type CONS, entre SS et SRI, SRI reçoit la valeur de NSAP_{R} qui lui est transmise par le service réseau et l'interprète (de par le modèle de référence OSI) comme signifiant que c'est sa propre entité de transport qui est concernée. SRI interprète alors les valeurs de TSAP qui lui sont fournies par l'entité de transport à l'intérieur de la demande d'ouverture de connexion TPDU-CR, et va alors chercher dans les paramètres privés l'adresse du point d'accès au service réseau du système destinataire NSAP_{D} pour effectuer le prolongement de la connexion vers le système destinataire SD. Ainsi, si l'on se reporte à la figure 8, on peut considérer ce qui se produit au niveau du système source SS, et dans le relais de transport SRI de type BDSG selon l'invention et le comparer à ce qui se produit dans le système source et dans le relais SRA de transport de type MSDSG selon l'art antérieur.

Dans le système de relais selon l'invention, on fournit donc la valeur de TSAP_{D} dans la demande d'ouverture de connexion TPDU-CR. On dispose donc du couple de valeurs T-Sel_{D} et NSAP_{D}. De ce couple de valeurs, on extrait la valeur de NSAP_{D} à laquelle correspond une valeur de NSAP_{R} du premier relais qui se trouve entre SS et SD sur le chemin de routage choisi, ici le relais SRI. (qui se trouve être, par hypothèse, le seul relais se trouvant entre le système source et le système destinataire, mais il pourrait bien entendu y avoir plusieurs relais entre SS et SD). La correspondance entre la valeur de NSAP_{D} et NSAP_{R} se trouve dans une table contenue dans les systèmes SS et SD, et dans le(s) relais qui se trouve(nt) sur n'importe lequel des chemins de routage pouvant conduire les informations entre SS et SD. Cette table est connue de l'homme de l'art sous son sigle RIB (Routing Information Base, qui est une base de données de routage qui est définie au préalable par l'utilisateur du système source) définissant les relations entre les adresse de NSAP et les chemins de sortie physique. Cette table RIB est étendue pour contenir la correspondance entre NSAP_{D} et NSAP_{R}. Bien entendu, une fois que la valeur de NSAP_{R} est déduite de la valeur de NSAP_{D}, la demande de connexion TPDU-CR peut être véhiculée depuis SS jusqu'à SD, par l'intermédiaire de SRI.

Dans le système selon l'art antérieur, ainsi qu'on peut le voir à la figure 8, seule la valeur de T-Sel_{D} est envoyée dans la demande d'ouverture de connexion TPDU-CR et c'est la valeur de NSAP_{D} qui est utilisée par le service de réseau tout au long du chemin menant les informations depuis SS jusqu'à SD à travers le relais SRA.

Le détail du fonctionnement du système de relais de transport selon l'invention est détaillé par les tableaux I, II, III qui figurent en annexe à la description, à la fin de celle-ci.

On se réfère également aux figures 6 et 7.

### 1) en ce qui concerne ce qui se produit dans le système initiateur SS, comme indiqué au tableau I :

Dans la demande de connexion TPDU-CR sont incluses les adresses des points d'accès au service transport des systèmes source et destinataire, à savoir TSAP_{S} et TSAP_{D}, qu'on désigne également sous le nom de TSAP appelante et TSAP appelée. Ainsi qu'il a été dit plus haut, chacune de ces adresses de TSAP se décompose en une valeur de sélecteur de transport T-Sel_{S} et T-Sel_{D} d'une part, et d'autre part, en adresses de NSAP_{S} et NSAP_{D}, ces adresses de NSAP étant contenues dans les paramètres privés de la demande de connexion TPDU-CR. Le système initiateur, à partir de la table de correspondance contenue dans sa RIB, déduit l'adresse de NSAP du relais, à savoir NSAP_{R}. Ainsi les adresses NSAP utilisées à l'interface réseau par le système initiateur sont respectivement NSAP_{S} et NSAP_{R}.

### 2) En ce qui concerne ce qui se produit dans le système relais SRI, comme indiqué au tableau II :

La demande de connexion reçue par le système relais SRI est évidemment-strictement identique à la demande de connexion TPDU-CR émise par le système initiateur SS, ainsi qu'on peut le voir en comparant les tableaux I et II. De même, les adresses NSAP reçues à l'interface réseau du système relais SRI, sont celles utilisées à l'interface réseau du système initiateur SS, c'est à dire NSAP_{S} et NSAP_{R}. Le relais SRI effectue le routage au niveau de son service de transport, en utilisant les adresses de TSAP_{S} et TSAP_{D}. Il utilise au niveau de son service réseau, comme valeur de NSAP appelante sa propre adresse NSAP_{R}. A partir de sa propre table de correspondance RIB, il déduit de la valeur de NSAP_{D} lue dans la demande de connexion, l'adresse de NSAP qu'il doit utiliser à son interface réseau, ici NSAP_{D}. S'il était nécessaire d'utiliser en plus de SRI, un autre système relais, à savoir SRI₁, la valeur de NSAP appelée serait NSAP_{R1}.

### 3) En ce qui concerne ce qui se produit dans le système destinataire SD, ainsi qu'il est indiqué sur le tableau III :

La demande de connexion reçue est strictement identique à la demande de connexion TPDU-CR, émise par le système relais SRI (Tableau II). De même les adresses de NSAP reçues à l'interface réseau sont les adresses de NSAP utilisées à l'interface réseau par le système relais SRI, c'est à dire NSAP_{R} et NSAP_{D}. Par comparaison entre la valeur de NSAP_{D} reçue à l'interface réseau et la valeur de NSAP_{D} contenue dans les paramètres privés de la demande de connexion TPDU-CR, le système SD en déduit que c'est lui le réel destinataire de la demande de connexion et son service de transport transmet les informations à la session qui lui correspond.

Dans le sens SD vers SS, le système SD renvoie une confirmation de connexion TPDU-CC au système SS, suivant un processus analogue à celui décrit ci-dessus.

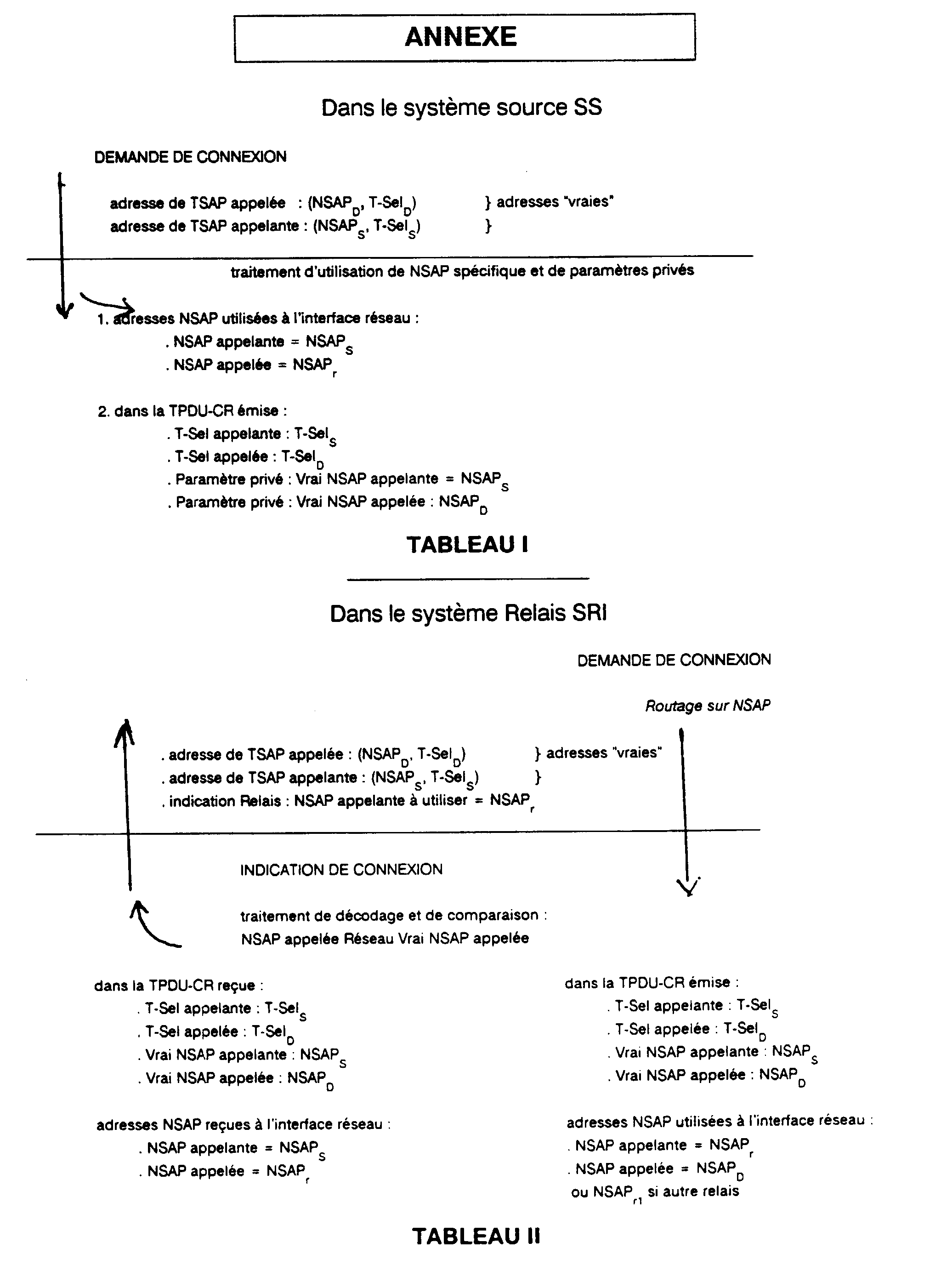

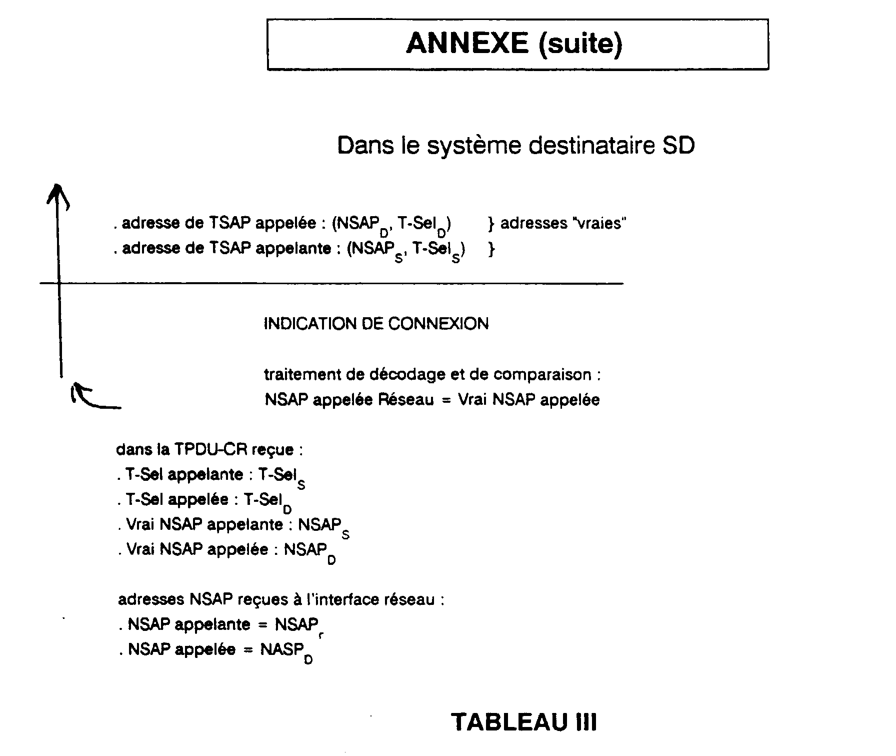

## Revendications

1. Dans un système comportant au moins un relais de transport OSI, une méthode pour assurer la coopération entre au moins un premier système contenant au moins un système source (SS), mettant en oeuvre un profil de transport OSI s'appuyant sur un service de réseau en mode connecté dit CONS et au moins un second système incluant au moins un système destinataire (SD) mettant en oeuvre un profil de transport OSI s'appuyant sur un service de réseau en mode non connecté dit CLNS, comprenant les étapes suivantes :
1) le routage des informations s'effectue sur la couche de transport en utilisant les sélecteurs de transport T-Sel pour les systèmes source et destinataire (T-Sels et T-Seld, respectivement)
2) on utilise les adresses NSAP des points d'accès (NSAPs et NSAPd) au service réseau des systèmes source et destinataire(SS et SD),
caractérisée en ce que :
3) on transporte les adresses TSAP des points d'accès au service transport des systèmes source et destinataire (TSAPs, TSAPd) de bout en bout par la couche de transport de manière transparente et sans modification, à l'intérieur des demandes de connexion TPDU-CR, les adresses des points d'accès au service réseau utilisées par le service réseau étant celles des systèmes source et du relais (NSAPs, NSAPd).

2. Méthode selon la revendication 1, caractérisée en ce que les adresses des points d'accès au service transport des systèmes source et destinataire comprennent les valeurs des sélecteurs de transport T-Sels et T-Seld de ces mêmes systèmes.

3. Méthode selon l'une des revendications 1, 2 caractérisée en ce que les adresses des points d'accès au service transport comprennent les adresses des points d'accès au service réseau des mêmes systèmes NSAPs et NSAPd qui sont contenues dans des champs privés autorisés par le modèle de référence OSI.

4. Méthode selon la revendication 3, caractérisée en ce que le système source (SS), le relais (SRI) et le système destinataire comprennent chacun une table de correspondance entre la valeur du point d'accès NSAPd au service réseau du système destinataire (SD) et celle du relais (SRI).

## Patentansprüche

1. In einem System, das wenigstens ein OSI-Transportrelais enthält, angewendetes Verfahren für die Sicherstellung der Kooperation wenigstens eines ersten Systems, das wenigstens ein Quellsystem (SS) enthält, das ein OSI-Transportprofil benutzt, das sich auf einen CONS genannten Netzdienst im angeschlossenen Modus stützt, mit wenigstens einem zweiten System, das wenigstens ein Zielsystem (SD) enthält, das ein OSI-Transportprofil verwendet, das sich auf einen CLNS genannten Netzdienst im nicht angeschlossenen Modus stützt, mit den folgenden Schritten:
1) Ausführen der Lenkung der Informationen in der Transportschicht, indem für die Quell- und Zielsysteme die Transportselektoren T-Sel (T-Sels bzw. T-Seld) verwendet werden,
2) Verwenden der Adressen NSAP (NASPs und NSAPd) der Zugriffspunkte auf den Netzdienst der Quell- und Zielsysteme (SS und SD),
dadurch gekennzeichnet, daß:
3) die Adressen TSAP der Zugriffspunkte auf den Transportdienst der Quell- und Zielsysteme (TSAPs, TSAPd) von Anfang bis Ende durch die Transportschicht in transparenter Weise und ohne Modifikation innerhalb der Anschlußanforderungen TPDU-CR transportiert werden, wobei die Adressen der Zugriffspunkte auf den Netzdienst, die vom Netzdienst verwendet werden, diejenigen der Quellsysteme und des Relais (NSAPs, NSAPd) sind.

2. Verfahren nach Anspruch 1, dadurch gekennzeichnet, daß die Adressen der Zugriffspunkte auf den Transportdienst der Quell- und Zielsysteme die Werte der Transportselektoren T-Sels und T-Seld eben dieser Systeme enthalten.

3. Verfahren nach einem der Ansprüche 1, 2, dadurch gekennzeichnet, daß die Adressen der Zugriffspunkte auf den Transportdienst die Adressen der Zugriffspunkte auf den Netzdienst eben dieser Systeme NSAPs und NSAPd, die in den vom OSI-Referenzmodell autorisierten abgeschlossenen Feldern enthalten sind, umfassen.

4. Verfahren nach Anspruch 3, dadurch gekennzeichnet, daß das Quellsystem (SS), das Relais (SRI) und das Zielsystem jeweils eine Tabelle für die Entsprechung zwischen dem Wert des Zugriffspunkts NSAPd auf den Netzdienst des Zielsystems (SD) und demjenigen des Relais (SRI) enthalten.

## Claims

1. In a system comprising at least one OSI transport relay, a method for ensuring co-operation between at least one first system containing at least one source system (SS), making use of an OSI transport profile relying on a connected mode network service, known as CONS, and at least one second system including at least one destination system (SD) making use of an OSI transport profile relying on an unconnected mode network service, known as CLNS, comprising the following stages:
1) the routing of information takes place on the transport layer by using the transport selectors T-Sel for the source and destination systems (T-Sels and T-Seld, respectively)
2) use is made of the addresses NSAP of the points of access (NSAPs and NSAPd) to the network service of the source and destination systems (SS and SD),
characterised in that:
3) the addresses TSAP of the points of access to the transport service of the source and destination systems (TSAPs, TSAPd) are transported from one end to the other via the transport layer in a transparent manner and without modification, within the connection requests TPDU-CR, the addresses of the points of access to the network service used by the network service being those of the source systems and the relay (NSAPs, NSAPd).

2. Method according to claim 1, characterised in that the addresses of the points of access to the transport service of the source and destination systems comprise the values of the transport selectors T-Sels and T-Seld of these same systems.

3. Method according to one of claims 1,2 characterised in that the addresses of the points of access to the transport service comprise the addresses of the points of access to the network service of the same systems NSAPs and NSAPd, which are contained in private fields authorised by the OSI reference model.

4. Method according to claim 3, characterised in that the source system (SS), the relay (SRI) and the destination system each comprise a table of correspondence between the value of the point of access NSAPd to the network service of the destination system (SD) and that of the relay (SRI).
